# EUROPÄISCHE PATENTANMELDUNG

(11) **EP 0 805 542 A2**
(43) Veröffentlichungstag der Anmeldung: **05.11.1997**
(21) Anmeldenummer: 97104841.8
(22) Anmeldetag: 21.03.1997
(51) Int. Cl.: H02K 5/22

(54) **Ventilatormotor**

(30) Priorität: 10.05.1996 DE 19618862; 02.05.1996 DE 19617456
(71) Anmelder: MAICO ELEKTROAPPARATE-FABRIK GmbH, D-78056 Villingen-Schwenningen (DE)
(72) Erfinder: Krösche, Herbert, 78647 Trossingen (DE); Obergfell, Elke, 78078 Niedereschach (DE)
(74) Vertreter: Grosse, Rainer, Dipl.-Ing.

(57) **Zusammenfassung**

Die Erfindung betrifft einen elektrischer Ventilatormotor mit einem Gehäuse, das einen Anschlußkasten für den elektrischen Anschluß an eine elektrische Anschlußleitung aufweist, wobei das Gehäuse, insbesondere der Anschlußkasten, mindestens eine Leitungseinführung und einen abnehmbaren Deckel für den Zugang zu elektrischen Anschlußelementen für die Anschlußleitung aufweist. Es ist vorgesehen, daß die Leitungseinführung (15) an einem vom Deckel (11) unabhängigen Wandteil (13) des Gehäuses (2) ausgebildet ist.

## Beschreibung

Die Erfindung betrifft einen elektrischen Ventilatormotor mit einem Gehäuse, das einen Anschlußkasten für den elektrischen Anschluß an eine elektrische Anschlußleitung aufweist, wobei das Gehäuse, insbesondere der Anschlußkasten, mindestens eine Leitungseinführung und einen abnehmbaren Deckel für den Zugang zu elektrischen Anschlußelementen für die Anschlußleitung aufweist.

Es ist bekannt, bei elektrischen Ventilatormotoren Gehäuse vorzusehen, die Anschlußkästen für den elektrischen Anschluß an elektrische Anschlußleitungen aufweisen. Das Gehäuse, insbesondere der Anschlußkasten, der integraler Bestandteil des Gehäuses sein kann oder aber einen separaten Bereich des Gehäuses bildet, weist mindestens eine Leitungseinführung auf, die an einem abnehmbaren Deckel angeordnet ist. Für den elektrischen Anschluß des Ventilatormotors ist es daher erforderlich, zunächst die Anschlußleitung in die Leitungseinführung des Deckels einzuführen, das heißt, den Deckel "aufzufädeln". Es erfolgt dann das elektrische Anschließen der Anschlußleitung an entsprechende elektrische Anschlußelemente des Anschlußkastens. Ist dies erfolgt, so wird der Deckel soweit auf der elektrischen Anschlußleitung zurückgeschoben, daß er montiert werden kann, das heißt, er wird am Gehäuse befestigt, so daß er den Zugang zu den elektrischen Anschlußelementen abdeckt. Anschließend werden dann die Leitungseinführungen verschraubt, sofern diese als Kabelverschraubungen ausgebildet sind. Diese Ausgestaltung erhöht den Montageaufwand, da zunächst das Auffädeln des Deckels und später dessen Verschieben auf der elektrischen Anschlußleitung erfolgen muß. Ferner besteht die Gefahr, daß bei den Anschlußarbeiten das Auffädeln vergessen wird, so daß der elektrische Anschluß der Anschlußleitungen nochmals wieder gelöst werden muß, um die Auffädelarbeiten nachzuholen.

Der Erfindung liegt die Aufgabe zugrunde, die vorstehend genannten Nachteile zu vermeiden.

Diese Aufgabe wird erfindungsgemäß dadurch gelost, daß die Leitungseinführung an einem vom Deckel unabhängigen Wandteil des Gehäuses ausgebildet ist. Insofern ist es für die Durchfuhrung der Anschlußarbeiten nicht erforderlich, den Deckel auf die Anschlußleitung aufzufädeln, sondern dieser wird lediglich abgeschraubt, wodurch die elektrischen Anschlußelemente zugänglich werden. Der Monteur führt die Anschlußleitung durch die Leitungseinführung hindurch bis in eine Position, in der die Belegung der elektrischen Anschlußelemente erfolgen kann. Mithin wird die elektrische Anschlußleitung und die einzelnen elektrischen Kabel der Leitung gleich in ihre endgültige Position verbracht. Das Vergessen des Auffädelns eines Deckels kann nicht erfolgen, da dieser völlig unabhängig von der Leitungseinführung ist. Letztere befindet sich an einem Wandteil des Gehäuses, das fest mit dem übrigen Gehäuse verbunden ist und somit eine definierte Position einnimmt. Die feste Verbindung mit dem Wandteil bedeutet nicht, daß diese einstückig ausgebildet sein muß, jedoch besteht eine feste Gehäusezuordnung. Sind die elektrischen Anschlußarbeiten beendet, so wird der zuvor abgenommene Deckel aufgesetzt und befestigt.

Nach einer Weiterbildung der Erfindung ist vorgesehen, daß die Leitungseinführung als Kabelverschraubung ausgebildet ist. Eine Kabelverschraubung hat den Vorteil einer guten Abdichtung des Anschlußkastens gegenüber äußeren Einflüssen.

Ferner ist es vorteilhaft, wenn sich der Anschlußkasten im Bereich des B-seitigen Lagerschilds befindet, wobei er vorzugsweise abgerundet, insbesondere ballig, also strömungsgünstig ausgebildet ist. Unter dem Bereich des B-seitigen Lagerschilds ist der Bereich des Ventilatormotors zu verstehen, der dem Wellenstutzen gegenüberliegt. Aufgrund der balligen Ausgestaltung wird die von einem auf dem Wellenstutzen des Ventilatormotors angeordneten Laufrads angesaugte Luft strömungsgünstig am Gehäuse des Ventilatormotors unter dessen Kühlung vorbeistreichen. Besonders vorteilhaft ist es, wenn diese ballige Ausgestaltung von dem Deckel oder bereichsweise von dem Deckel des Anschlußkastens gebildet wird.

Die Zeichnung veranschaulichen die Erfindung anhand eines Ausführungsbeispiels und zwar zeigt:
- Figur 1: einen Längsschnitt durch einen Ventilatormotor und

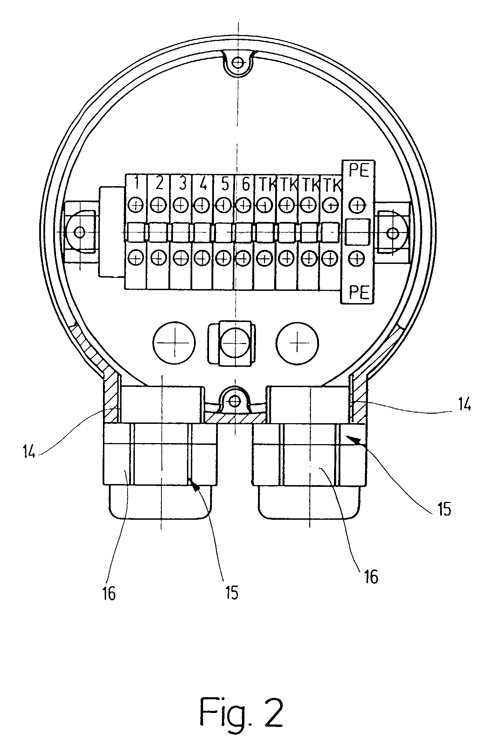

- Figur 2: eine Stirnansicht auf den Bereich des B-seitigen Lagerschilds des Motors, wobei dieser dort einen Anschlußkasten aufweist, dessen Deckel abgenommen ist.

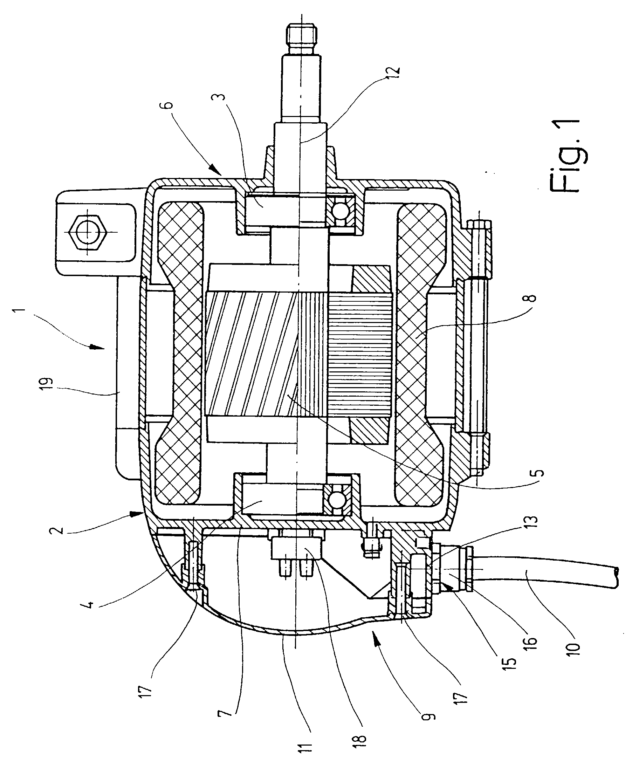

Die Figur 1 zeigt einen elektrischen Ventilatormotor 1, der ein Gehäuse 2 aufweist. Im Innern des Gehäuses 2 sind zwei Lager 3 und 4 für einen Rotor 5 angeordnet. Der Motor weist ein A-seitiges Lagerschild 6 auf, das sich im Bereich des Lagers 3 befindet. Ferner ist ein B-seitiges Lagerschild 7 vorgesehen, das das Lager 4 trägt. Innerhalb des Gehäuses 2 befindet sich ein Stator 8, der den Rotor 5 umgibt.

Dem B-seitigen Lagerschild 7 des Gehäuses 2 ist ein Anschlußkasten 9 zugeordnet, der dem elektrischen Anschluß an eine elektrische Anschlußleitung 10 dient. Der Anschlußkasten 9 weist einen abnehmbaren Deckel 11 auf, der -im Hinblick auf die Drehachse 12 des Ventilatormotors 1- ballig ausgebildet ist. Der Anschlußkasten 9 besitzt ein Wandteil 13, das einstückig mit dem Gehäuse 2 ausgebildet ist. Es steht etwa rechtwinklig auf dem B-seitigen Lagerschild 7. Das Wandteil 13 wird von zwei Gewindebohrungen 14 durchsetzt, in die Leitungseinführungen 15 eingeschraubt sind. Vorzugsweise sind die Leitungseinführungen 15 als Kabelverschraubungen 16 ausgebildet.

Unabhängig von dem Wandteil 13 ist das B-seitige Lagerschild 7 von dem separaten Deckel 11 überfangen. Dieser kann durch Losen von Gewindeschrauben 17 vom Lagerschild 7 und damit vom übrigen Gehäuse 2 abgenommen werden.

Für einen elektrischen Anschluß des Ventilatormotors 1 führt der Monteur mindestens eine elektrische Anschlußleitung 10 in eine der Verschraubungen 16 ein und schließt die Kabel der Anschlußleitung 10 an elektrische Anschlußelemente 18 an, die sich innerhalb des Anschlußkastens 9 befinden. Um dies durchführen zu können, hat der Monteur zuvor die Gewindeschrauben 17 gelöst und den Deckel 11 vom B-seitigen Lagerschild 7 abgenommen. Dies bedeutet, daß er freie Zugänglichkeit zu den elektrischen Anschlußelementen 18 hat und die Leitungsverlegung endgültig vornehmen kann, da nach der Belegung der Anschlußelemente keine Verlagerung der elektrischen Anschlußleitungen beziehungweise dessen Einzelkabel durchgeführt werden muß. Ist der eletrische Anschluß erfolgt, so wird die Kabelverschraubung 16 festgezogen. Anschließend ist es dann nur noch erforderlich, den Deckel 7 wieder aufzusetzen und mittels der Gewindeschrauben 17 zu sichern.

Aufgrund der erfindungsgemäßen Ausgestaltung ist eine einfache und fehlerfreie Montage möglich, wobei die ballige Ausführungsform strömungstechnisch ideal ist. Die Montagefreundlichkeit wird noch dadurch verbessert, daß sich die Leitungseinführungen im Bereich des B-seitigen Lagerschilds 7 befinden. Durch die etwa halbkugelförmige Ausbildung des Gehäuses aufgrund der entsprechenden Formgebung des Deckels wird von einem auf den Wellenstutzen des Ventilatormotors befestigten Lufterrad der Luftstrom strömungsgünstig über den ballig geformten Bereich geführt. Anschließend kann er Kühlrippen 19 des Gehäuses 2 passieren und gelangt dann zu dem erwähnten Lüfterrad.

## Patentansprüche

1. Elektrischer Ventilatormotor mit einem Gehäuse, das einen Anschlußkasten für den elektrischen Anschluß an eine elektrische Anschlußleitung aufweist, wobei das Gehäuse, insbesondere der Anschlußkasten, mindestens eine Leitungseinführung und einen abnehmbaren Deckel für den Zugang zu elektrischen Anschlußelementen für die Anschlußleitung aufweist, **dadurch gekennzeichnet**, daß die Leitungseinführung (15) an einem vom Deckel (11) unabhängigen Wandteil (13) des Gehäuses (2) ausgebildet ist.

2. Ventilatormotor nach Anspruch 1, **dadurch gekennzeichnet**, daß die Leitungseinführung (15) als Kabelverschraubung (16) oder Würgenippel ausgebildet ist.

3. Ventilatormotor nach einem der vorhergehenden Ansprüche, **dadurch gekennzeichnet**, daß sich der Anschlußkasten (9) im Bereich des B-seitigen Lagerschilds (7) befindet.

4. Ventilatormotor nach einem der vorhergehenden Ansprüche, **dadurch gekennzeichnet**, daß der Anschlußkasten (9) und/oder der Deckel (11) strömungsgünstig ballig ausgebildet ist/sind.
